(19)

Europäisches
Patentamt
European
Patent Office
Office européen
des brevets

(11) **EP 4 345 940 A1**

(12) **EUROPEAN PATENT APPLICATION**

(43) Date of publication:
**03.04.2024 Bulletin 2024/14**

(21) Application number: **22306433.8**

(22) Date of filing: **27.09.2022**

(51) International Patent Classification (IPC):
*H01M 4/133* <sup>(2010.01)</sup>    *H01M 4/36* <sup>(2006.01)</sup>
*H01M 4/38* <sup>(2006.01)</sup>    *H01M 4/583* <sup>(2010.01)</sup>
*H01M 4/02* <sup>(2006.01)</sup>

(52) Cooperative Patent Classification (CPC):
**H01M 4/386; H01M 4/133; H01M 4/134;**
**H01M 4/1393; H01M 4/1395; H01M 4/362;**
**H01M 4/366; H01M 4/583;** H01M 2004/021;
H01M 2004/027

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Commissariat à l'énergie atomique**
**et aux énergies alternatives**
**75015 Paris (FR)**
• **Umicore**
**1000 Brussels (BE)**

(72) Inventors:
• **PORCHER, Willy**
**38054 GRENOBLE cedex 09 (FR)**
• **DEILHES, Claire**
**38054 GRENOBLE cedex 09 (FR)**
• **GUTEL, Elise**
**38054 GRENOBLE cedex 09 (FR)**
• **VINCENS, Christophe**
**38054 GRENOBLE cedex 09 (FR)**

(74) Representative: **Cabinet Nony**
**11 rue Saint-Georges**
**75009 Paris (FR)**

Remarks:
Amended claims in accordance with Rule 137(2)
EPC.

(54) **NEGATIVE ELECTRODE FOR LI-ION BATTERY**

(57)    The present invention relates to a negative electrode, in particular suitable for use in a lithium-ion battery, having a negative electrode layer formed on at least one surface of a current collector, wherein said negative electrode layer comprises at least one Si-C composite particulate material comprising silicon-based particles and one or more carbonaceous material; particles of at least one uncompressible graphite; and particles of at least one compressible graphite, the total uncompressible graphite content ranging from 2% to 60% by mass of the total mass of the negative electrode layer.

**EP 4 345 940 A1**

**EP 4 345 940 A1**

## Description

The instant invention is directed to negative electrodes (also referred to as anodes) for lithium-ion batteries. It also relates to a lithium-ion battery comprising such a negative electrode, and a process for preparing such a negative electrode.

Lithium-ion batteries are the most widely used secondary systems for portable electronic devices. Compared to aqueous rechargeable cells, such as nickel-cadmium and nickel metal hydride, Li-ion batteries (or cells) have higher energy density, higher operating voltages, lower self-discharge and low maintenance requirements. These properties have made Li-ion cells the highest performing available secondary battery.

The electrochemical reaction occurring inside these lithium-ion batteries is distributed in the volume of the electrodes on the surface and inside the particles of active material. More specifically, the negative electrodes consist at least in part of a metal or semi-metal M capable of forming an alloy with lithium as $Li_xM$ type with x ranging between 0 and 5. These metals or semi-metals are typically silicon, aluminum, tin or germanium, preferably silicon. They are of particular interest as a negative electrode active material in a lithium-ion battery because most of these metals or semi-metals have a very high theoretical specific capacity (for example 3580 mAh/g for silicon) compared to that of graphite (approximately 372 mAh/g). However, the major drawback of these materials is their volume expansion which accompanies the lithiation of the material and the formation of the $Li_xM$ alloy (for example the volume of a $Li_{3.75}Si$ particle is 3.8 times greater than the initial Si particle).

In order to maintain the integrity of the material during cycling, composite materials have been developed, wherein the silicon is integrated in the form of nanoparticles, having an average size of typically 50 to 150 nm, in micron particles of carbon composite material for forming a silicon-carbon composite. These silicon-carbon composites are added to the formulation conventionally employed with the graphite-based anode.

However, silicon-based materials still cause a large volume change during charging and discharging. A graphite electrode typically has a density between 1.5 and 1.8 g.cm$^{-3}$ with a specific capacity from 340 to 360 mAh/g, thus a volumetric capacity between 500 to 650 mAh/cm$^3$ (or Ah/L). In contrast, for electrodes containing a silicon-based composite, such high densities will generate strong stresses when alloying silicon since the volume expansion of silicon is 280% against 10% for graphite. More particularly, the mass increase during lithiation is 93% for silicon against 10% for graphite. Accordingly, an active material composed of graphite with only 6% of silicon sees its specific capacity increased to 500 mAh/g, i.e an improvement of more than 130 mAh/g or 35%. Thus, a silicon graphite electrode generally has a density of between 1.2 and 1.7 g/cm$^3$ for specific reversible capacities of between 500 and 1000 mAh/g. Finally, the reversible volumetric capacity should be at least of 600 Ah/L at the electrode level.

In order to improve the performances of the silicon-carbon composites, embodiments of silicon-carbon composites have been made. For example, the document WO 2012/093224 discloses the synthesis of silicon composites with three carbonaceous materials: 1) one non-porous spherical graphite with an average particle size from 0.1 to 100 $\mu$m and preferably a specific surface from 0.1 to 3 m$^2$/g; 2) one non-porous non-spherical graphite with an average particle size from 0.1 to 100 $\mu$m (and preferably a specific surface from 5 to 20 m$^2$/g); and 3) one carbon black type carbon with a particle size less than or equal to 100 nm (and preferably a specific surface higher or equal to 50 m$^2$/g); and Si particles with a particle size less than or equal to 1 $\mu$m. This silicon composite is prepared by milling the graphite blend with silicon and then thermally treated before being integrated in an electrode with supplemental third carbonaceous material. As for the document WO 2020/085609, it relates to the use, as anode material layer, of a mixture of at least one graphite formed of large particles (average diameter of 1 to 50 $\mu$m - natural graphite of the spherical or amorphous type - BET between 2 and 4 m$^2$/g), a second smaller graphite (average diameter between 0.15 and 0.41 $\mu$m, artificial graphite in the form of flakes, BET surface area between 0.6 and 4 m$^2$/g) and one silicon composite with an average diameter from 0.15 to 0.41 $\mu$m.

However, when Li-ion accumulators with high energy density including such negative electrodes are used, in particular with rapid charges in one hour, this is likely to lead to the formation of lithium metal on the surface of such anodes. The swelling of the silicon particles induces an electrode morphology evolution with a decrease of the electrode porosity accompanied by an increase of the electrode tortuosity, and finally the lithium transport within the electrolyte slows down which leads to lithium plating.

Accordingly, there is still a need for yet better negative electrodes that can further optimize the performance of Li-ion batteries.

In particular, the object of the present invention is to provide a negative electrode (or anode) that can lead to a lithium-ion battery having a large capacity, capacity retention during charge/discharge cycles, and avoiding the formation of lithium metal on the surface of such negative electrode (in other words, avoiding the "lithium plating" phenomenon).

According to a first of its aspects, the invention relates to a negative electrode, in particular suitable for use in a lithium-ion battery, having a negative electrode layer formed on at least one surface of a current collector, wherein said negative electrode layer comprises:

- at least one Si-C composite particulate material comprising silicon-based particles and one or more carbonaceous materials;
- particles of at least one uncompressible graphite; and
- particles of at least one compressible graphite,

the total uncompressible graphite content ranging from 2% to 60% by mass of the total mass of the negative electrode layer.

The mass ratio of total uncompressible graphite and total compressible graphite in the negative electrode active material is preferably between 20:80 and 70:30, still more preferably between 20:80 and 60:40.

Graphites conventionally used as anode material for Li-ion batteries are of the compressible type and require pressures between 0 and 100 MPa to compress.

Unexpectedly, the inventors have discovered that combining a mixture of Si-C composite particulate material and conventional compressible graphite(s), with at least one uncompressible graphite, in the negative electrode layer, makes it possible to achieve a high energy density, while reducing or even preventing lithium metal deposition (lithium plating) during the charge/discharge cycles of the lithium-ion battery incorporating such a negative electrode.

In particular, as shown in the following examples, the so-formed negative electrodes according to the invention exhibit a significant volumetric capacity, especially of at least 600 Ah/L advantageously at least 645 Ah/L, in particular of at least 690 Ah/L. They make it possible to achieve a lithium-ion battery with a high density, advantageously of at least 750 Wh/L.

Furthermore, the negative electrode layer according to the invention is able to withstand compression (typically 100 MPa (a maximum value)), which advantageously allows to maintain an effective network of pores during the operation of the battery, typically in a rigid cell, despite the repeated volume expansion/contraction of silicon, and allows to prevent lithium metal deposition.

Advantageously, the negative electrode layer according to the invention, before any cycling of the battery in which the negative electrode is implemented, has a porosity ranging from 40% to 20%, in particular from 35 to 25%.

The porosity can be measured by calculating the apparent density which is the ratio between the loading and the thickness of the active layer. Having access to the apparent density ($d_{app}$) and the theoretical density of the negative electrode layer ($d_{th}$) calculated from the theoretical density of the different components (i) of the negative electrode layer, it is possible to calculate the porosity P:

$$P = 1 - \frac{d_{app}}{d_{th}} \quad \text{with} \quad \frac{1}{d_{th}} = \sum_i \frac{\%i}{d_{th}^i}$$

in which %i is the mass proportion of a component (i) in the negative electrode layer.

Further, using of the negative electrode according to the invention can provide a lithium-ion battery having a good capacity retention and excellent fast charge/discharge capabilities.

As detailed hereafter, the so-called "Si-C composite particulate material" comprises silicon-based particles and one or more carbonaceous materials, in particular chosen from amorphous carbon, graphite and graphene. In a preferred embodiment, the Si-C composite particulate material comprises silicon-based particles embedded in a carbon matrix, in particular embedded in an amorphous carbon matrix. The Si-C composite particulate material may optionally further comprise graphite and/or graphene particles, whereby said graphite and/or graphene particles are preferably not embedded in the carbon matrix.

The negative electrode layer according to the invention can be obtained by applying a mixture, also referred to as an "ink" or "paste" or "slurry", comprising, in one or more solvents, at least the Si-C composite particulate material comprising silicon-based particles and one or more carbonaceous materials, compressible and uncompressible graphites, and preferably at least one binder and optionally at least one electronically conductive additive.

The invention thus relates, according to another of its aspects, to such a slurry for preparing a negative electrode according to the invention.

It also relates to a process for preparing a negative electrode according to the invention, comprising at least the steps of applying, on the surface of the current collector, a negative electrode slurry as described above, comprising in one or more solvent(s), said Si-C composite particulate material, compressible and uncompressible graphites, preferably one or more binder(s) and optionally one or more electronically conductive additive(s), followed by the evaporation of the one or more solvent(s), in particular by drying.

The invention also relates to the use of a negative electrode according to the invention in a lithium-ion battery.

It also relates to a lithium-ion battery comprising a negative electrode according to the invention.

Other characteristics, embodiments and advantages of a negative electrode according to the invention, of its preparation and of its implementation in a lithium-ion battery, are disclosed in the remainder of the text.

The invention may be understood better from reading the detailed description that follows, given with reference to the appended drawings in which:

> Figure 1 represents the experimental setup to measure graphite powders density at different pressures.
> Figure 2 represents the evolution of the density (g.cm$^{-3}$) in function of the pressure (MPa or Ton.cm$^{-2}$) for various commercial graphite powders noted "A" to "E", according to the compression test as described above in a cylindrical matrix with a surface area of 2 cm$^2$.

## COMPRESSIBLE AND UNCOMPRESSIBLE GRAPHITES

As previously stated, the negative electrodes according to the invention contain, as negative electrode active material, at least one Si-C composite particulate material and a mix of at least one compressible graphite and at least one uncompressible graphite.

Graphite is the most common form of carbon with a layered, planar structure.

The compressibility may be determined by a test of compression performed on the graphite powder, more particularly by a uniaxial compression measurement as described hereafter.

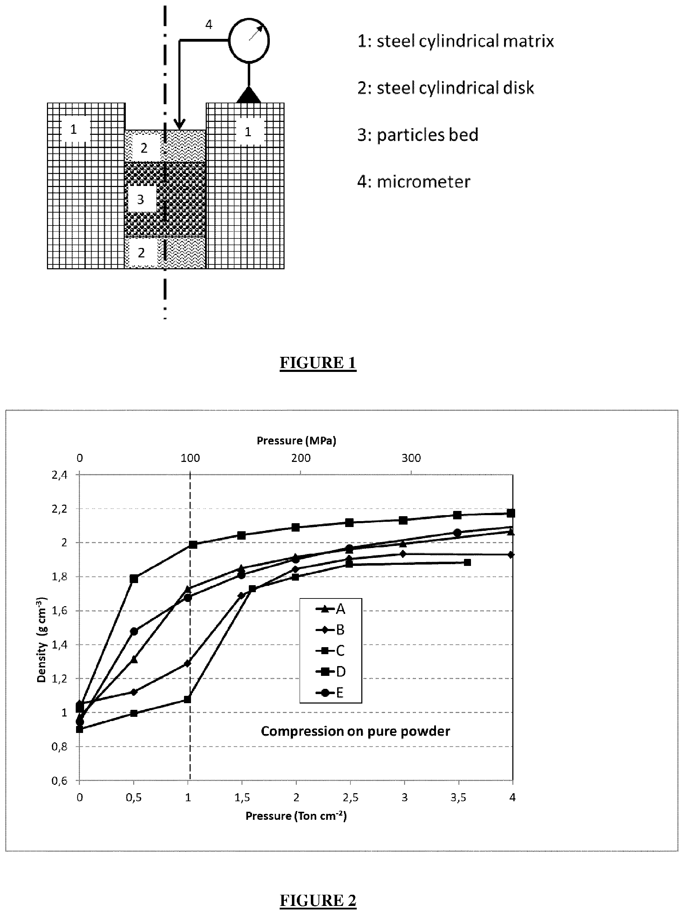

The test is performed by placing graphite powder into a steel cylindrical matrix of 16 mm diameter between two metallic steel cylinders or disks, as shown on Figure 1. The significant height of the powder bed (> 5 mm with > 1 g of material) allows to reach a high precision on the density which is calculated based on graphite mass in the matrix ($m_G$) measured with a 1 mg precision, surface of the matrix (S) (for example of 2 cm$^2$) and height of the powder bed ($h_B$) measured with 10 $\mu$m precision.

The density is thus calculated from the measurement of the height of the powder bed by the following equation:

$$d = \frac{m_G}{S.h_B}$$

The behavior of the powder or the density in function of pressure is obtained by applying an increasing pressure on the disks while measuring the particle bed height.

For example, Figure 2 represents the evolution of the density (g.cm$^{-3}$) in function of the pressure (MPa or Ton.cm$^{-2}$) for various commercial graphite powders noted "A" to "E". To obtain the Figure 2, the pressure is applied for 10 seconds on the upper cylindrical disk. Then, the pressure comes back to 0 and the particle bed height is measured for 30 seconds after removal of the pressure.

The behavior of the powder is a good prediction of the behavior in an electrode.

As shown in Figure 2, A, D and E graphites, representatives of graphite conventionally used as anode material for Li-ion batteries, are of the compressible type since they require pressures between 0 and 100 MPa to compress. They have a density between 1.50 and 2.25 g.cm$^{-3}$, in particular between 1.50 and 2.00 g.cm$^{-3}$ for a compression pressure of 100 MPa.

C and B graphites are by contrast uncompressible graphites and their density is strictly lower than 1.50 g.cm$^{-3}$ at 100MPa.

Thus, advantageously, an "uncompressible" graphite according to the invention can be characterized by a density, especially assessed by the compression test as described above, strictly lower than 1.50 g.cm$^{-3}$ at 100 MPa, in particular between 0.80 and 1.40 g.cm$^{-3}$ and more particularly between 0.80 and 1.30 g.cm$^{-3}$, at 100 MPa.

By contrast, a "compressible" graphite according to the invention can be characterized by a density, especially assessed by the compression test as described above, greater than or equal to 1.50 g.cm$^{-3}$ at 100 MPa, in particular between 1.50 g.cm$^{-3}$ and 2,25 g.cm$^{-3}$ , and more particularly between 1.50 g.cm$^{-3}$ and 2,00 g.cm$^{-3}$.

Compressible and uncompressible graphite particulate materials have particle sizes and surface areas which can be very similar.

In particular, the compressible and uncompressible graphite particulate materials of the invention may, independently from one another, have a 50% diameter (D50) in a volume-based cumulative particle size distribution ranging from 1 $\mu$m to 50 $\mu$m, and preferably from 5 $\mu$m to 30 $\mu$m.

The volume-based particle size distribution can be measured by a laser diffraction method.

The BET specific surface area of compressible and uncompressible particulate graphites of the invention may be, independently from one another, between 0.5 and 10 m$^2$/g, preferably between 0.5 and 5 m$^2$/g.

The BET specific surface area can be measured with isotherm adsorption-desorption of N2 at 77K after preheating for one hour under a flow of argon at 150°C.

The total mass amount of uncompressible graphite in the negative electrode according to the invention ranges from 2% to 60% by mass, in particular from 5% to 50% by mass, and more particularly from 10% to 50% by mass, based on the total mass of the negative electrode layer.

The "total mass amount" or "total content" of uncompressible graphite (respectively compressible graphite) refers to the mass of uncompressible graphite (respectively compressible graphite) particles implemented according to the invention in combination with the Si-C composite particulate material in the negative electrode material, plus possibly the mass of uncompressible graphite (respectively compressible graphite) potentially included in the Si-C composite particulate material, as detailed hereafter.

As mentioned above, according to a particularly preferred embodiment, the mass ratio of uncompressible graphite and compressible graphite in the negative electrode layer is preferably between 20:80 to 70:30, still more preferably between 20:80 and 60:40.

## Si-C COMPOSITE PARTICULATE MATERIAL

As mentioned above, the negative electrode active material of a negative electrode in accordance with the invention comprises, besides the specific mix of compressible and uncompressible graphitic particulate materials, at least one Si-C composite particulate material comprising silicon-based particles and one or more carbonaceous materials.

The invention is not limited to any particular type of Si-C composite particulate material. Thus, any Si-C composite particulate material known as electrode active material is suitable for the preparation of an anode layer in accordance with the invention.

Suitable carbonaceous materials include amorphous carbon, crystalline carbon, for example graphite, graphene, and combinations thereof.

### Silicon-based particles

As mentioned above, the Si-C composite particulate material used in the negative electrode layer comprises silicon-based particles.

The silicon-based particles are preferably nanosized.

The silicon-based particles of the Si-C composite particulate material preferably have a 90% diameter (D90) of 200 nm or less in a number-based cumulative primary particle size distribution. The primary particle size can be measured though observation by use of a microscope such as SEM or TEM.

More particularly, the silicon-based particles of the Si-C composite particulate material can have a 10% diameter (D10) ranging from 20 nm to 80 nm, a 50% diameter (D50) ranging from 60 nm to 150 nm, and a 90% diameter (D90) ranging from 100 nm to 250 nm.

The silicon-based particles have in particular a BET specific surface area ranging from 10 to 150 m$^2$/g, in particular from 50 to 120 m$^2$/g.

Preferably, the silicon-based particles are silicon nanoparticles or silicon nanoparticles dispersed in a matrix comprising a silicon oxide (SiO$_x$ with 0<x≤2).

In a particular embodiment, the silicon-based particles comprise a surface layer comprising SiO$_x$ with 0<x≤2. The SiO$_x$ layer covering said Si nanoparticles may be SiO$_2$ or may comprise an intimate mixture of amorphous Si and crystalline silicon dioxide (SiO$_2$), in particular such that 0.3 ≤ x ≤1.5, more preferably 0.5 ≤ x < 1.5.

An average thickness of the surface layer comprising SiO$_x$ is preferably not less than 0.5 nm and not more than 10 nm. The average thickness can be measured on a TEM photograph.

The silicon-based particles of the Si-C composite particulate material can have an oxygen content of preferably not less than 1% by mass and not more than 18% by mass, and further preferably not less than 2% by mass and not more than 10% by mass. The oxygen content can be quantitatively determined by an oxygen and nitrogen simultaneous analyser (inter gas fusion-infrared absorption method), for example.

The content of silicon-based particles in the Si-C composite particulate material preferably ranges from 10% to 80% by mass, preferably from 10% to 60% by mass and more particularly from 10% to 40% by mass, related to the total mass of the Si-C composite particulate material.

In particular, the Si-C composite particulate material used in the negative electrode material layer according to the invention may have a content in Si equal or greater to 8 % by mass, in particular ranging from 10 to 65% by mass, more particularly from 13 to 60% by mass, more particularly lower or equal to 50 % by mass, and even more particularly lower or equal to 30% by mass, related to its total mass.

The silicon-based particles can be produced for example by a method described in WO 2012/000858. An example of process for the preparation of the silicon-based particles is detailed in the following example 1.

### Carbonaceous materials

As mentioned above, the Si-C composite particulate material comprises one or more carbonaceous materials.

In particular, the Si-C composite particulate material can comprise one, two or three types of carbonaceous materials, preferably selected from amorphous carbon, graphitic carbon and graphene.

According to a particularly preferred embodiment, the Si-C composite particulate material comprises silicon-based particles embedded (or dispersed) in a matrix of carbon. Preferably, the carbon matrix consists of amorphous carbon.

Carbon may be characterized as being amorphous by contrast to graphite or graphene. Amorphous carbon can be issued from the thermal decomposition of a carbon-containing organic compound.

Suitable examples of carbon-containing organic compound are polymeric compounds and pitch (coal tar pitch, petroleum pitch, meso-phased pitch). Examples of polymeric compounds suitable for the invention, may be in particular polyvinylalcohol (PVA), polyacrylonitrile, styrene-based polymers, cellulosic polymers, epoxy resins, polyvinyl chloride, sucrose and combinations thereof. Preferably, the amorphous carbon material is derived from petroleum pitch or coal tar pitch. The pitch as precursor of the amorphous carbon material has a softening point of preferably not less than 80°C and not more than 300°C. The pitch as precursor of the amorphous carbon material has a residual carbon ratio of preferably not less than 40% by mass, and further preferably of not less than 60% by mass.

The residual carbon ratio is determined by a method described below. Solid pitch is ground with a mortar or the like, and the ground material is subjected to mass and thermal analysis under flow of nitrogen gas. A proportion of mass at 1100°C to charged mass is defined as the residual carbon ratio. The residual carbon ratio corresponds to a fixed carbon content as measured at a carbonization temperature of 1100°C in JIS K2425.

The amorphous carbon matrix is useful to protect the silicon-based particles from the reaction with the electrolyte in the battery, resulting in the formation of a SEI ("Solid electrolyte interphase) layer and the increase of irreversible capacity.

In particular, the Si-C composite particulate material may comprise silicon-based particles embedded in a matrix of amorphous carbon, with a mass ratio of amorphous carbon / silicon ranging from 0.50 to 3.0 and preferably from 0.50 to 1.5.

The amount of amorphous carbon, in particular issued from a carbon-containing organic compound and more particularly from pitch, preferably ranges from 10% to 80% by mass, preferably from 10% to 60% by mass and more particularly from 10% to 40% by mass, related to the total mass of the Si-C composite material.

The Si-C composite particulate material may further optionally comprise crystalline carbonaceous particles, in particular graphitic carbon material particles and/or graphene particles.

In a particular embodiment, in the Si-C composite particulate material, the silicon-containing particles and the graphitic carbon material particles and/or the graphene particles can be linked by the amorphous carbon material. The linking can improve conductivity between the graphitic carbon material particles and/or the graphene particles and between the silicon-based particles, respectively, and can buffer the volume change accompanying expansion and contraction.

In a preferred embodiment, the Si-C composite material comprises crystalline carbonaceous particles, in particular graphite and/or graphene particles and more particularly graphite particles, that are not embedded in the carbon matrix, in particular in the matrix of amorphous carbon as described above with the silicon-based particles dispersed therein.

The graphitic particles optionally included in the Si-C composite material have preferably a plate-like shape.

The graphitic carbon material particles have preferably a 50% diameter (D50) in a volume-based cumulative particle size distribution of preferably not less than 1 $\mu$m and not more than 50 $\mu$m, further preferably not less than 5 $\mu$m and not more than 35 $\mu$m, and still further preferably not more than 25 $\mu$m.

The graphitic carbon material particles to be used in the Si-C particulate composite material according to the invention have preferably a BET specific surface area of preferably ranging from 1.0 m$^2$/g to 10.0 m$^2$/g and more preferably from 2.0 m$^2$/g to 8.0 m$^2$/g.

The graphitic carbon material optionally present in the Si-C composite particulate material may be compressible or uncompressible graphite according to the distinction as defined hereabove. In a particular embodiment, the graphitic carbon material optionally present in the Si-C composite particulate material is a compressible graphite.

The content in graphitic carbon particles optionally present in the Si-C composite particulate material preferably ranges from 0% to 80% by mass, in particular from 0% to 60% by mass, related to the total mass of the Si-C composite particulate material.

In particular, the mass ratio of graphite / silicon in the Si-C composite particulate material may range from 0.0 to 8.0 and preferably from 0.0 to 4.0.

As mentioned above, the invention is not limited to the specific types of Si-C particulate composites disclosed hereabove, and other variants of Si-C composite particulate materials can be considered for their use in combination with the compressible and uncompressible graphites in the negative electrode material layer according to the invention.

Preferably, the Si-C composite particulate material of the negative electrode active material according to the present invention has a BET specific surface area of not less than 1 m$^2$/g and not more than 10 m$^2$/g, further preferably

not less than 2 m$^2$/g and not more than 5 m$^2$/g.

In particular, the Si-C composite material used according to the invention has a 50% diameter (D50) in the volume-based particle size distribution, preferably between 5 μm and 20 μm.

Preferably, the Si-C composite material used according to the invention has a 90% diameter (D90) in the volume-based particle size distribution, of not more than 40 μm, preferably not more than 30 μm.

The Si-C composite material may have a volume-based particle size distribution with a 10% diameter (D10) ranging from 2 μm to 10 μm, a 50% diameter (D50) ranging from 5 μm to 20 μm, and a 90% diameter (D90) ranging from 8 μm to 40 μm.

The volume-based particle size distribution can be measured by a laser diffraction method.

The Si-C composite particulate material according to the invention may have an oxygen content of preferably 5,0% by mass or less, preferably of 3.0% by mass or less.

*Process for preparing the Si-C composite particulate material*

The Si-C composite particulate material can be prepared by any method known to those skilled in the art, for example as disclosed in document WO 2022/074031.

The Si-C composite particulate material can be obtained, for example, by a method comprising obtaining a mixture of the silicon-based particles with the precursor of amorphous carbon, subjecting the resultant mixture to a thermal treatment at a temperature superior to the melting point of the precursor of amorphous carbon, while applying a shearing force to the mixture to ensure a good dispersion of the silicon particles within the precursor of amorphous carbon (for example using a high shear mixer or an extruder), cooling down the obtained mixture and milling it, before finally performing a heat treatment to form the particles of composite comprising silicon nanoparticles dispersed within a matrix of amorphous carbon.

Alternatively, before performing the final heat treatment, the mixture of silicon in the precursor of amorphous carbon can be mixed with graphite and/or graphene particles. The final heat treatment is then performed. The graphite particles do not become embedded into the amorphous carbon matrix material resulting from the heat treatment of the carbon precursor. Only the silicon particles are.

The milling and mixing steps are conducted preferably under a non-oxidizing atmosphere in order to avoid oxidization of Si. Specific examples of the non-oxidizing atmosphere include an atmosphere in which inert gas such as argon gas, nitrogen gas or the like is filled.

The heat treatment for forming the amorphous carbon from the carbon precursor, in particular from the carbon-containing organic compound, is performed at a temperature of preferably not less than 500°C and not more than 2000°C, further preferably not less than 700°C and not more than 1300°C, and particularly preferably not less than 900°C and not more than 1100°C

## NEGATIVE ELECTRODE

Slurry for the preparation of the negative electrode

The negative electrode layer may be obtained from a mixture, that is referred to as a "slurry" or an "ink", comprising, in one or more solvents, at least said Si-C particulate material, compressible and uncompressible graphite materials and, preferably, at least one binder and optionally at least one electronically conductive additive.

The solvent(s) may be for example chosen from organic or aqueous solvents, for example from N-methyl-2-pyrrolidone (NMP), acetonitrile (ACN), ethanol, water, and mixtures thereof. The amount of the solvent(s) is adjusted to have viscosity at which the slurry is easily applied onto the current collector.

The solid content of the slurry for the preparation of the negative electrode layer is preferably greater than or equal to 30% by mass, preferably between 35% and 55% by mass.

Specific examples of the binder include polysaccharides, lattices, in particular of lithium-polyacrylate (Li-PAA), sodium polyacrylate (Na-PAA), potassium polyacrylate (K-PAA), polyacrylic acid (H-PAA), sodium carboxymethyl cellulose (Na-CMC), styrene-butadiene rubber type (SBR or in English "styrene-butadiene rubber"). The binder(s) are added to improve the cohesion of the various components of the negative electrode, its mechanical strength on the current collector or even its flexibility properties.

The binder(s) may represent from 1 to 15% by mass, in particular from 2 to 10% by mass, relative to the total mass of the negative electrode layer.

Electronically conductive additives may optionally be implemented to improve the electronic conductivity of the electrode. They can be chosen for example from carbon fibers, carbon black, carbon nanotubes and mixtures thereof.

The amount of electronically conductive additive(s) may be comprised between 0% and 10% by mass, in particular from 0.1% to 5% by mass, relative to the total mass of the negative electrode layer.

The total amount of inactive components, including binder(s) and/or electronically conductive additives, may range between 1% to 25% by mass, in particular between 2% and 15% by mass and more particularly between 2% and 10% by mass, relative to the total mass of the negative electrode layer.

The invention also relates, according to another of its aspects, to a process for preparing a slurry or ink intended for forming the negative electrode according to the invention, comprising at least the step of mixing, in one or more solvents, at least said uncompressible graphite and compressible graphite, preferably in a mass ratio uncompressible graphite to compressible graphite ranging from 20:80 to 70:30, in particular from 20:80 to 60:40, said Si-C particulate composite material and preferably one or more binder(s) and optionally one or more electronically conductive additive(s).

The mixture thus formed is preferably homogenized, before its implementation to form the negative electrode layer of the invention, for example using a high shear mixer.

Preparation of the negative electrode

The negative electrode according to the invention comprises a current collector and at least one electrode layer covering the current collector.

Specific examples of the current collector include nickel foil, copper foil, nickel mesh, copper mesh, and the like.

The negative electrode according to the invention can thus be obtained by applying, on the surface of the current collector, a negative electrode slurry as described above comprising, in one or more solvent(s), the Si-C composite particulate material, uncompressible graphite particles and compressible graphite particles and preferably one or more binder(s) and optionally one or more electronically conductive additive(s); followed by the evaporation of the one or more solvent(s) in particular by drying.

The slurry may be applied by any techniques known by the person skilled in the art, e.g. bar coating, screen printing, knife coating, roller coating, spin coating and the like.

The thickness of the negative electrode layer varies with the geometry of the cell or battery and typically ranges from a few microns to several millimeters. The negative active layer formed on the surface of the current collector, can have a thickness of between 10 $\mu$m and 400 $\mu$m, in particular between 20 $\mu$m and 250 $\mu$m.

The evaporation of the solvent(s) can be carried out by drying, for example in an oven, at a temperature of between 30°C and 120°C, in particular between 35 and 55°C.

The negative electrode layer thus obtained after removal of the solvent(s) adheres to the current collector.

Preferably, the Si-C composite material represents from 10% to 90% by mass, preferably from 13% to 65% by mass, of the total mass of the negative electrode layer.

Preferably, the inactive components, including binder(s) and/or electronically conductive additives, may range between 1% to 25% by mass, in particular between 2% and 15% by mass and more particularly between 2% and 10% by mass, relative to the total mass of the negative electrode layer.

Preferably, the total amount of compressible graphite and uncompressible graphite in the negative electrode layer may be between 10% and 90% by mass, preferably between 30% and 85 % by mass, of the total mass of the negative electrode layer.

Preferably, the amount of silicon in the negative electrode layer is not less than 5% by mass, preferably between 5% and 45% by mass, and more particularly between 8% and 40% by mass, based on the total mass of the negative electrode layer.

According to a particular embodiment, a negative electrode layer according to the invention may comprise, or even consist in:

- from 75% to 99%, in particular from 85% to 98% by mass, and more particularly from 90% to 98% by mass, based on the total mass of the negative electrode layer, of said SiC composite particulate material, compressible graphite particles and uncompressible graphite particles; and
- from 1 to 25%, in particular from 2% and 15% by mass, and more particularly from 2% to 10% by mass, based on the total mass of the negative electrode layer, of inactive components, including one or more binder(s) and optionally one or more electronically conductive additive(s).

**LITHIUM-ION BATTERY**

The negative electrode is particularly advantageous for its use in a lithium-ion battery.

The invention is thus also directed to a lithium-ion battery comprising a negative electrode according to the invention, as defined above or prepared as disclosed hereabove.

A lithium-ion battery according to the invention more specifically comprises a negative electrode (anode) according to the invention, a positive electrode (cathode) and an electrolyte, preferably a non-aqueous electrolyte.

As examples of the positive electrode, mention may be made of the positive electrode active materials selected

from $LiCoO_2$, $LiNi_{0,6}Mn_{0,2}Co_{0,2}O_2$, $LiNi_{0,8}Mn_{0,1}Co_{0,1}O_2$, $LiNi_{0,8}Co_{0,15}Al_{0,05}O_2$, $Li_{1,2}Ni_{0,2}Mn_{0,6}O_2$, $LiFePO_4$, and the like.

The electrolyte may be preferably a non-aqueous electrolytic solution or a non-aqueous polymer electrolyte.

Specific examples thereof include an organic electrolytic solution obtained by dissolving lithium salt such as $LiClO_4$, LiPF6, LiAsF6, LiBF4, $LiSCO_3CF_3$, $CH_3SO_3$ Li, $CF_3SO_3Li$ or the like into a non-aqueous solvent such as ethylene carbonate (EC), diethyl carbonate (DEC), dimethyl carbonate (DMC), fluoro ethylene carbonate (FEC), ethyl methyl carbonate (EMC), propylene carbonate (PC), butylene carbonate, acetonitrile, propionitrile, dimethoxyethane, tetrahydrofuran, $\gamma$-butyrolactone or the like; a gel polymer electrolyte comprising polyethylene oxide, polyacrylonitrile, polyvinylidene fluoride, polymethyl methacrylate or the like; and a solid polymer electrolyte comprising a polymer having an ethylene oxide bond.

Moreover, a small amount of material which causes a decomposition reaction during initial charge of the lithium ion battery may be added to the electrolytic solution. Specific examples of the material include vinylene carbonate (VC), biphenyl, propane sultone (PS), fluoro ethylene carbonate (FEC), ethylene sultone (ES) or the like. The additive amount thereof is preferably not less than 0.01% by mass and not more than 50% by mass.

In the lithium-ion battery of the present invention, a separator can be placed between the positive electrode sheet and the negative electrode sheet. Specific examples of the separator include a nonwoven fabric, cloth, or a microporous film each primarily containing polyolefin such as polyethylene, polypropylene or the like, and a combination thereof.

The lithium ion battery of the present invention can be used as a power supply for an electronic device such as a mobile phone, a mobile personal computer, a mobile information terminal and the like; a power supply for an electric machinery such as an electric drill, an electric vacuum cleaner, an electric vehicle and the like; or storage of electric power obtained by a fuel cell, photovoltaic power generation, wind power generation and the like.

The invention will now be described by means of the following examples, given of course by way of nonlimiting illustration of the invention.

## EXAMPLES

In the present examples, various physical properties were measured by the following methods.

BET specific surface area: The specific surface area of the powders to be analyzed was measured with isotherm adsorption-desorption of N2 at 77K after preheating the sample for 1 h under a flow of argon at 150°C.

Oxygen content: The oxygen content of the powders is determined by the following method, using an oxygen-nitrogen analyzer. A sample of the powder to be analyzed is put in a closed tin capsule that is put itself in a nickel basket. The basket is placed in a graphite crucible and heated under helium as carrier gas to above 2000°C. The sample thereby melts, and oxygen reacts with the graphite from the crucible to CO or $CO_2$ gas. These gases are guided into an infrared measuring cell. The observed signal is recalculated to an oxygen content.

Volume-based particle size distribution: measured by a laser diffraction method in a wet dispersion (mix demineralized water + 5% ethanol).

## EXAMPLE 1

**Preparation of the negative electrode slurry and the negative electrode**

1.1. Preparation of the negative electrode slurry

Components

*Si-C composite powder*

To produce the Si-C composite powder, a silicon powder is first obtained by applying a 60kW radio frequency (RF) inductively coupled plasma (ICP), using argon as plasma gas, to which a micron-sized silicon powder precursor is injected at a rate of circa 45 g/h, resulting in a prevalent (i.e. in the reaction zone) temperature above 2000K. In this first process step, the precursor becomes totally vaporized. In a second process step, an argon flow of 17 $Nm^3$/h is used as quench gas immediately downstream of the reaction zone in order to lower the temperature of the gas below 1600K, causing a nucleation into metallic submicron silicon powder. Finally, a passivation step is performed at a temperature of 100°C during 5 minutes by adding 100 l/h of a $N_2/O_2$ mixture containing 1 mole% oxygen.

The specific surface area (BET) of the obtained silicon powder is measured to be 89 $m^2$/g. The oxygen content of the obtained silicon powder is measured to be 8.8 wt%. The number-based particle size distribution of the silicon powder is determined to be: dSi10 = 54 nm, dSi50 = 107 nm and dSi90 = 172 nm.

Then, a dry blend is made of 100g of the obtained silicon powder and 180g of a petroleum-based pitch powder having a softening point of 230°C. The blend is fed under a nitrogen flow at a feed rate of 1000 g/h into a twin-screw extruder, operated at a temperature of 300°C. The mixture of the silicon powder in pitch thus obtained is cooled to room temperature and, once solidified, pulverized and sieved on a 400-mesh sieve, to produce an intermediate powder.

20g of the intermediate powder is then mixed with 14g of graphite "E" powder having a plate-like shape, a BET of 5.4 m$^2$/g and a dG50 of 6.5 $\mu$m, for 3 hours on a roller bench, after which the obtained mixture is passed through a mill to de-agglomerate it. At these conditions good mixing is obtained but the graphite particles do not become embedded in the pitch.

The graphite "E" is a compressible graphite, as shown in its compression curve on Figure 2 obtained by the compression test as described in the description above.

A thermal after-treatment is further given to the obtained mixture of the intermediate powder and the graphite powder as follows: the product is put in a quartz crucible in a tube furnace, heated up at a heating rate of 3°C/min to 1050°C, kept at that temperature for two hours and then cooled. All this is performed under argon atmosphere. The fired product is finally manually crushed in a mortar and sieved over a 325-mesh sieve to form the Si-C composite powder.

The total Si content in the Si-C composite powder is measured to be 24.8 wt% by XRF, having an experimental error of +/- 0.3 wt%. This corresponds to a calculated value based on a weight loss of the pitch upon heating of circa 35 wt% and an insignificant weight loss upon heating of the other components. The oxygen content of this composite powder is measured to be 2.8 wt%.

The specific surface area (BET) of the obtained composite powder is measured to be 2.9 m$^2$/g. The volume-based particle size distribution of the powder has a D10 equal to 4.1 $\mu$m, a D50 equal to 10.5 $\mu$m and a D90 equal to 23.2 $\mu$m.

The specific capacity of the composite powder measured in a half cell with lithium metal as counter electrode, according to the procedure described elsewhere, is 1020 mAh/g for an average of 3 cells and the initial coulombic efficiency (1st CE) is 90.35%.

*Compressible and uncompressible graphites*

Two commercial graphites were used:

- graphite "C" (commercialized within the trademark HPG-6FC from HITACHI) that is an uncompressible graphite according to the invention as shown in its compression curve on Figure 2 obtained by the compression test as described hereabove.
- graphite "D" (commercialized within the trademark MAG-E3 from HITACHI) that is a compressible graphite as shown in its compression curve on Figure 2 obtained by the compression test as described hereabove.

*Inactive components*

Inactive components are binder (lithium polyacrylate "Li-PAA") sold under H-PAA with a mass average molar mass, Mw, of 250,000 g/mol and a viscosity average molar mass, Mv, of 1,250,000 g/mol, blended in respective proportion of (5:2) and fully dissociated by adding LiOH in molar proportion and carbon conductive additive with 2 wt.% of C65 from Imerys and 1 wt.% of vapor grown carbon fiber (VGCF) from Showa Denko.

Negative electrode slurry

The negative electrode slurry is prepared by dispersing the Si-C particulate composite, the graphite materials and the inactive components in water, in the proportions indicated in table 1 below, with a final solid content of 42%, using a high shear mixer for 15 minutes at 3500 rpm.

TABLE 1 - Proportions of ingredients for the preparation of the negative electrode layer

| Negative electrodes | Materials for the preparation of the negative electrode layer | | | |
| --- | --- | --- | --- | --- |
| | Si-C composite %wt | Uncompressible Graphite C %wt | Compressible Graphite D %wt | Inactive materials %wt |
| 1 | 22.5 | 54 | 13.5 | 10 |
| 2 | 22.5 | 45 | 22.5 | 10 |
| 3 | 22.5 | 33.75 | 33.75 | 10 |
| 4 | 22.5 | 22.5 | 45 | 10 |

(continued)

| Negative electrodes | Materials for the preparation of the negative electrode layer | | | |
|---|---|---|---|---|
| | Si-C composite %wt | Uncompressible Graphite C %wt | Compressible Graphite D %wt | Inactive materials %wt |
| Comparative | 22.5 | 0 | 67.5 | 10 |

1.2.Preparation of the negative electrode

The negative electrode slurry was uniformly coated onto 10 $\mu$m thickness copper foil using a pilot line with drying from 35°C to 55°C.

The negative electrodes are first slit to remove uncoated current collector using a slitting machine and then densified with a calendaring machine applying up to 10 tons with rolls of 40 cm diameter.

The final composition of the negative electrode layers is shown in table 2 below.

TABLE 2 - Composition of the negative electrode layer

| Negative electrodes | Graphite ratio (%) | | Composition of the negative electrode material | | |
|---|---|---|---|---|---|
| | Total uncompressible graphite (graphite C) | Total compressible graphite (graphites D and E) | Graphite (C+D+E) %wt | Si and amorphous C %wt | Inactive materials %wt |
| 1 | 70% | 30% | 77 | 13 | 10 |
| 2 | 58% | 42% | 77 | 13 | 10 |
| 3 | 44% | 56% | 77 | 13 | 10 |
| 4 | 29% | 71% | 77 | 13 | 10 |
| Comparative | 0% | 100% | 77 | 13 | 10 |

Characterization of the negative electrodes

The areal capacity (mAh.cm$^{-2}$) is determined by the active layer loading multiplied by the specific capacity of the anode.

All the anodes have an areal capacity of 3.0 mAh.cm$^{-2}$, that means a loading of 6.5 mg/cm$^2$.

Minimum density ($d_{min}$) is obtained by measuring the anode thickness. This is the ratio of the loading and the anode thickness considering only the active layer and not the current collector.

Minimum porosity:

Minimum porosity ($P_{min}$) is obtained from anode density (d). Theoretical anode density is deduced from theoretical densities of the components of the electrode ($d_{th}^i$).

$$\mathrm{P}_{min} = 1 - \frac{d}{d_{th}^{anode}}, \qquad with \quad \frac{1}{d_{th}^{anode}} = \sum_i \frac{\%i}{d_{th}^i}$$

Thus, considering the theoretical densities of Si-C composite, of graphites and of inactive components, of 2.15 g.cm$^{-3}$, 2.25 g.cm$^{-3}$ and 1.65 g.cm$^{-3}$, the theoretical density of the anode 1 is calculated as follows.

$$\frac{1}{d_{th}^{anode}} = \frac{0.225}{2.15} + \frac{0.675}{2.25} + \frac{0.1}{1.65}, d_{th}^{anode} = 2.15 \, \mathrm{g.cm}^{-3}$$

which leads to a minimum porosity for the anode 1 of:

$$Pmin = 1 - \frac{1.39}{2.15} = 35\%$$

Maximum volumetric capacity $Q_V$ (Ah/L):

The minimum porosity is directly linked to the maximum volumetric capacity allowing to appreciate the initial energy density at cell level that can be obtained. For example, for anode 1:

$$Q_v = Q_m \cdot \%_{AM} \cdot d = 511 \text{ mAh/g} \cdot 90\% \text{ of active material} \cdot 1.393 \text{ g/cm}^3 = 641 \text{ mAh/cm}^3$$

(or Ah/L)

The specific capacity $Q_m$ is measured in half cell at C/20 and 20°C in delithiation up to 1V vs Li+/Li after a the first lithiation up to 5 mV at constant current of C/20 followed by a constant voltage at 5 mV up to C/100.
Table 3 below sums up the values obtained for the anodes prepared from the various negative electrode material of table 1.

TABLE 3

| Negative electrodes | Graphite ratio (%) | | Areal capacity (mAh.cm-2) | $P_{min}$ (%) | Max Volumetric Capacity (Ah/L) | $d_{min}$ (g.cm-3) |
|---|---|---|---|---|---|---|
| | Total uncompressible graphite (graphite C) | Total compressible graphite (graphites D+E) | | | | |
| 1 | 70% | 30% | 3.0 | 35 | 641 | 1.39 |
| 2 | 58% | 42% | 3.0 | 32 | 668 | 1.45 |
| 3 | 44% | 56% | 3.0 | 30 | 691 | 1.50 |
| 4 | 29% | 71% | 3.0 | 25 | 740 | 1.60 |
| Comparative | 0 | 100 | 3.0 | 18 | 808 | 1.75 |

It may be noticed that higher is the uncompressible graphite part and higher is the minimum porosity that can be obtained. In particular, with 44% of uncompressible graphite, a minimum porosity of 30% is obtained or a minimum density of 1.50 g.cm-3, while without uncompressible graphite, a minimum porosity of 18% is obtained corresponding to an anode density of 1.75 g.cm-3. With a proportion of 70% of uncompressible graphite, a minimum porosity of 35% is obtained or an anode density of 1.39 g.cm-3.

## EXAMPLE 2

### Electrochemical performances of the negative electrodes

The electrochemical performances of the negative electrodes prepared from the various negative electrode materials as described in example 1 are evaluated in 18650-type Li-ion cells, with NMC 622 cathode and carbonate-based electrolyte with 1M LiPF6 and 10% of fluoroethylene carbonate (FEC).
More particularly, the cylindrical cells with an external diameter of 18 mm and a length of 65 mm were assembled using a semi-automatic winding machine inside a dry room with a dew point of -40°C. Each cell consists of a double-side coated 55 mm wide cathode and a 57 mm wide anode with two 60 mm wide Celgard 2320 separators. Electrodes and separators were wound around a 4 mm diameter mandrel and the resultant jellyroll dried in a vacuum oven overnight at 55°C. Its diameter is 17.2 mm which is smaller than the 17.40 mm inner casing diameter in order to ease the jellyroll insertion in the casing. After welding of the tabs on the bottom and the cap for the anode and cathode respectively and grooving, the cells were placed in an Ar-filled glove box for electrolyte filling with 6.8 mL and crimping.
Negative electrodes 3a and 3b correspond to a negative electrode 3 as prepared in example 1, densified to different values. Comp. 1, 2 and 3 correspond to a comparative negative electrode as prepared in example 1, densified to different values.
The following table 4 sums up the performances (porosity, volumetric capacity and number of cycles at C with 75% capacity retention) obtained for the various negative electrodes.

TABLE 4

| Negative electrodes | Graphite ratio (%) | | P tested (%) | Vol. Capacity (Ah/L) | Cycles at C with 75% capacity retention | Li plating (visually) |
|---|---|---|---|---|---|---|
| | Total uncompressive graphite (graphite C) | Total compressive graphite (graphites D + E) | | | | |
| 1 | 70 | 30 | 35 | 645 | 300 | A little |
| 2 | 58 | 42 | 35 | 645 | 350 | No |
| 3a | 44 | 56 | 35 | 645 | 350 | No |
| 3b | 44 | 56 | 30 | 690 | 330 | No |
| 4 | 29 | 71 | 35 | 645 | 320 | A little |
| Comp. 1 | 0 | 100 | 35 | 645 | 250 | YES (after cycling) |
| Comp. 2 | 0 | 100 | 30 | 690 | 140 | YES (after formation) |
| Comp. 3 | 0 | 100 | 40 | 595 | 350 | No |

For anodes without uncompressible graphite, the capacity retention of 75% is maintained for only 250 and 140 cycles for initial anode porosities of respectively 35% and 30%. When opening these cells, a clear lithium plating is observed and already after formation (3 cycles) for the cell with an anode having an initial porosity of 30%. A capacity retention of 350 cycles is obtained with this anode only having an initial porosity of 40% but which is associated to a quite low volumetric capacity.

In contrast, for the cells with an anode integrating uncompressible graphite, 75% of capacity retention is maintained for at least 300 cycles. In particular, for the cells with an anode integrating a content of 44% or 58% of uncompressible graphite, 75% of capacity retention is maintained for 350 cycles without Li plating. For the anode with 44% of uncompressible graphite, even at an initial anode porosity of 30%, no lithium plating is observed after 330 cycles. Note that this anode has an initial volumetric capacity of 690 Ah/L.

## Claims

1. A negative electrode, in particular suitable for use in a lithium-ion battery, having a negative electrode layer formed on at least one surface of a current collector, wherein said negative electrode layer comprises:

   • at least one Si-C composite particulate material comprising silicon-based particles and one or more carbonaceous materials;
   • particles of at least one uncompressible graphite; and
   • particles of at least one compressible graphite,

   the total uncompressible graphite content ranging from 2% to 60% by mass of the total mass of the negative electrode layer.

2. The negative electrode according to the previous claim, wherein the Si-C composite particulate material comprises silicon-based particles embedded in a carbon matrix.

3. The negative electrode according to claim 2, wherein the carbon matrix consists of amorphous carbon.

4. The negative electrode according to claim 2 or 3, further comprising graphite and/or graphene particles, whereby said graphite and/or graphene particles are not embedded in the carbon matrix.

5. The negative electrode according to any one of the previous claims, wherein the total uncompressible graphite content ranges from 5% to 50% by mass, in particular from 10% to 50% by mass, based on the total mass of the negative electrode layer.

6. The negative electrode according to any one of the previous claims, wherein the mass ratio of uncompressible graphite and compressible graphite in the negative electrode layer is between 20:80 and 70:30, in particular between 20:80 and 60:40.

7. The negative electrode according to any one of the previous claims, wherein the uncompressible graphite has a density, assessed by the compression test as described in the description, strictly lower than 1.50 g.cm$^{-3}$ at 100 MPa, in particular between 0.80 and 1.40 g.cm$^{-3}$ and more particularly between 0.80 and 1.30 g.cm$^{-3}$.

8. The negative electrode according to any one of the previous claims, wherein said compressible graphite has a density, assessed by the compression test as described in the description, greater than or equal to 1.50 g.cm$^{-3}$ at 100 MPa, in particular between 1.50 g.cm$^{-3}$ and 2,25 g.cm$^{-3}$, and more particularly between 1.50 g.cm$^{-3}$ and 2,00 g.cm$^{-3}$.

9. The negative electrode according to any one of the previous claims, wherein the compressible and uncompressible graphite particulate materials have, independently from one another, a BET specific surface area between 0.5 and 10 m$^2$/g, preferably between 0.5 and 5 m$^2$/g.

10. The negative electrode according to any one of the previous claims, wherein the Si-C composite particulate material has a BET specific surface area of not less than 1 m$^2$/g and not more than 10 m$^2$/g, further preferably not less than 2 m$^2$/g and not more than 5 m$^2$/g.

11. The negative electrode according to any one of the previous claims, wherein the Si-C composite material has an oxygen content of 5.0% by mass or less, preferably of 3.0% by mass or less.

12. The negative electrode according to any one of the previous claims, wherein the amount of silicon is not less than 5% by mass, preferably between 5% and 45% by mass, and more particularly between 8% and 40% by mass, based on the total mass of the negative electrode layer.

13. The negative electrode according to any one of the previous claims, wherein the negative electrode layer comprises, or even consists in:

   - from 75% to 99%, in particular from 85% to 98% by mass, and more particularly from 90% to 98% by mass, based on the total mass of the negative electrode layer, of said SiC composite particulate material, compressible graphite particles and uncompressible graphite particles; and
   - from 1 to 25%, in particular from 2% and 15% by mass, and more particularly from 2% to 10% by mass, based on the total mass of the negative electrode layer, of inactive components, including one or more binder(s) and optionally one or more electronically conductive additive(s).

14. A process for preparing a negative electrode as claimed in any one of claims 1 to 13, comprising at least the steps of applying, on the surface of the current collector, a negative electrode slurry comprising in one or more solvents, at least said Si-C composite particulate material, said uncompressible graphite particles and said compressible graphite particles, and preferably one or more binder(s) and optionally one or more electronically conductive additive(s); followed by the evaporation of the one or more solvent(s) in particular by drying.

15. A lithium-ion battery comprising a negative electrode as defined in any one of claims 1 to 13 or prepared according to claim 14; a positive electrode and an electrolyte, preferably a non-aqueous electrolyte.

**Amended claims in accordance with Rule 137(2) EPC.**

1. A negative electrode, in particular suitable for use in a lithium-ion battery, having a negative electrode layer formed on at least one surface of a current collector, wherein said negative electrode layer comprises:

   • at least one Si-C composite particulate material comprising silicon-based particles and one or more carbonaceous materials;
   • particles of at least one uncompressible graphite; and
   • particles of at least one compressible graphite;

the at least one uncompressible graphite has a density, assessed by the compression test as described in the description, strictly lower than 1.50 g.cm$^{-3}$ at 100 MPa;

the at least one compressible graphite has a density, assessed by the compression test as described in the description, greater than or equal to 1.50 g.cm$^{-3}$ at 100 MPa ; and

the total uncompressible graphite content ranging from 2% to 60% by mass of the total mass of the negative electrode layer.

2. The negative electrode according to the previous claim, wherein the Si-C composite particulate material comprises silicon-based particles embedded in a carbon matrix.

3. The negative electrode according to claim 2, wherein the carbon matrix consists of amorphous carbon.

4. The negative electrode according to claim 2 or 3, further comprising graphite and/or graphene particles, whereby said graphite and/or graphene particles are not embedded in the carbon matrix.

5. The negative electrode according to any one of the previous claims, wherein the total uncompressible graphite content ranges from 5% to 50% by mass, in particular from 10% to 50% by mass, based on the total mass of the negative electrode layer.

6. The negative electrode according to any one of the previous claims, wherein the mass ratio of uncompressible graphite and compressible graphite in the negative electrode layer is between 20:80 and 70:30, in particular between 20:80 and 60:40.

7. The negative electrode according to any one of the previous claims, wherein the uncompressible graphite has a density, assessed by the compression test as described in the description, between 0.80 and 1.40 g.cm$^{-3}$, in particular between 0.80 and 1.30 g.cm$^{-3}$.

8. The negative electrode according to any one of the previous claims, wherein said compressible graphite has a density, assessed by the compression test as described in the description, between 1.50 g.cm$^{-3}$ and 2,25 g.cm$^{-3}$, in particular between 1.50 g.cm$^{-3}$ and 2,00 g.cm$^{-3}$.

9. The negative electrode according to any one of the previous claims, wherein the compressible and uncompressible graphite particulate materials have, independently from one another, a BET specific surface area between 0.5 and 10 m$^2$/g, preferably between 0.5 and 5 m2/g.

10. The negative electrode according to any one of the previous claims, wherein the Si-C composite particulate material has a BET specific surface area of not less than 1 m$^2$/g and not more than 10 m$^2$/g, further preferably not less than 2 m$^2$/g and not more than 5 m$^2$/g.

11. The negative electrode according to any one of the previous claims, wherein the Si-C composite material has an oxygen content of 5.0% by mass or less, preferably of 3.0% by mass or less.

12. The negative electrode according to any one of the previous claims, wherein the amount of silicon is not less than 5% by mass, preferably between 5% and 45% by mass, and more particularly between 8% and 40% by mass, based on the total mass of the negative electrode layer.

13. The negative electrode according to any one of the previous claims, wherein the negative electrode layer comprises, or even consists in:

   - from 75% to 99%, in particular from 85% to 98% by mass, and more particularly from 90% to 98% by mass, based on the total mass of the negative electrode layer, of said SiC composite particulate material, compressible graphite particles and uncompressible graphite particles; and
   - from 1 to 25%, in particular from 2% and 15% by mass, and more particularly from 2% to 10% by mass, based on the total mass of the negative electrode layer, of inactive components, including one or more binder(s) and optionally one or more electronically conductive additive(s).

14. A process for preparing a negative electrode as claimed in any one of claims 1 to 13, comprising at least the steps of applying, on the surface of the current collector, a negative electrode slurry comprising in one or more solvents, at least said Si-C composite particulate material, said uncompressible graphite particles and said compressible graphite particles, and preferably one or more binder(s) and optionally one or more electronically conductive additive(s); followed by the evaporation of the one or more solvent(s) in particular by drying.

15. A lithium-ion battery comprising a negative electrode as defined in any one of claims 1 to 13 or prepared according to claim 14; a positive electrode and an electrolyte, preferably a non-aqueous electrolyte.

1: steel cylindrical matrix

2: steel cylindrical disk

3: particles bed

4: micrometer

**FIGURE 1**

**FIGURE 2**

Europäisches
Patentamt

European
Patent Office

Office européen
des brevets

# EUROPEAN SEARCH REPORT

Application Number

EP 22 30 6433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/256440 A1 (SAMSUNG SDI CO LTD [KR]) 24 December 2020 (2020-12-24) <br> * claims 1,5,8,11 * <br> * example 1 * <br> * table 3 * <br> ----- | 1-15 | INV. <br> H01M4/133 <br> H01M4/36 <br> H01M4/38 <br> H01M4/583 <br> H01M4/02 |
| X | EP 2 416 413 A1 (SUMITOMO METAL IND [JP]; CHUO DENKI KOGYO CO LTD [JP]) 8 February 2012 (2012-02-08) <br> * claims 1,2,5,10,12,17 * <br> * example 1 * <br> ----- | 1-7,10, 12-15 | |
| A | US 2021/013493 A1 (CHO YUNGU [KR] ET AL) 14 January 2021 (2021-01-14) <br> * the whole document * <br> ----- | 1,7-9 | |

| | | | TECHNICAL FIELDS SEARCHED (IPC) |
|---|---|---|---|
| | | | H01M |

The present search report has been drawn up for all claims

| Place of search | Date of completion of the search | Examiner |
|---|---|---|
| Munich | 20 February 2023 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6433

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2023

| Patent document cited in search report | | Publication date | Patent family member(s) | | Publication date |
|---|---|---|---|---|---|
| WO 2020256440 | A1 | 24-12-2020 | KR 20200145296 A | | 30-12-2020 |
| | | | US 2022320509 A1 | | 06-10-2022 |
| | | | WO 2020256440 A1 | | 24-12-2020 |
| EP 2416413 | A1 | 08-02-2012 | CN 102449824 A | | 09-05-2012 |
| | | | EP 2416413 A1 | | 08-02-2012 |
| | | | JP 5375953 B2 | | 25-12-2013 |
| | | | JP WO2010113783 A1 | | 11-10-2012 |
| | | | KR 20120022826 A | | 12-03-2012 |
| | | | US 2012251888 A1 | | 04-10-2012 |
| | | | WO 2010113783 A1 | | 07-10-2010 |
| US 2021013493 | A1 | 14-01-2021 | KR 20210007273 A | | 20-01-2021 |
| | | | US 2021013493 A1 | | 14-01-2021 |

EPO FORM P0459

For more details about this annex : see Official Journal of the European Patent Office, No. 12/82

## REFERENCES CITED IN THE DESCRIPTION

**Patent documents cited in the description**

- WO 2012093224 A
- WO 2020085609 A
- WO 2012000858 A
- WO 2022074031 A